# EUROPÄISCHE PATENTANMELDUNG

(11) **EP 1 559 766 A1**
(43) Veröffentlichungstag der Anmeldung: **03.08.2005**
(21) Anmeldenummer: 04030410.7
(22) Anmeldetag: 22.12.2004
(51) Int. Cl.: C09K 15/06, A23L 3/3544, C09B 61/00

(54) **Verfahren zur Stabilisierung carotinoidhaltiger Biomasse**

(30) Priorität: 31.01.2004 DE 102004004925
(71) Anmelder: Cognis IP Management GmbH, 40589 Düsseldorf (DE)
(72) Erfinder: Johannisbauer, Wilhelm, 40699 Erkrath (DE); Sander, Andreas, 89257 Illertissen (DE); Mahnke, Eike Ulf, 40878 Ratingen (DE)

(57) **Zusammenfassung**

Vorgeschlagen wird die Verwendung von Tocopherolgemischen zur Stabilisierung carotinoidhaltiger Biomassen und Biomassezubereitungen, insbesondere astaxanthinhaltiger Biomassen und Biomassezubereitungen, sowie ein Verfahren zur Stabilisierung derselben. Das eingesetzte Tocopherolgemisch enthält vorzugsweise α-, und β-, und γ- und δ- Tocopherol. Ein weiterer Gegenstand der Erfindung sind carotinoidhaltige Biomasse enthaltend 0,1 bis 10 Gew. % von Tocopherolgemischen - bezogen auf das Gewicht der Biotrockenmasse.

## Beschreibung

Die Erfindung befindet sich auf dem Gebiet der kosmetischen, pharmazeutischen Zubereitungen, der Futter- und der Lebensmittel. Sie betrifft die Verwendung von Tocopherolgemischen zur Stabilisierung carotinoidhaltiger Biomasse, ein Verfahren zur Stabilisierung carotinoidhaltiger Biomasse, sowie die stabilisierte Biomasse enthaltend Tocopherolgemische.

### Stand der Technik

Carotinoide und Carotinoid-Derivate sind oxydationsempfindliche Substanzen, die unter anderem zur Färbung von Lebensmitteln sowie in kosmetischen oder pharmazeutischen Zubereitungen Verwendung finden. Beispielsweise wird im Lebensmittelbereich um Lachs die charakteristische rosa-Färbung zu geben dem Fischfutter das Carotinoid Astaxanthin beigemischt.
Dieses kann entweder synthetischen Ursprungs sein oder aus natürlichen Quellen gewonnen werden (Cyanotech, Mera Pharmaceuticals). Astaxanthin ist ein Carotinoid, das aus Mikroalgen gewonnen werden kann, welches in den letzten Jahren bekannt geworden, dadurch dass es zunehmend in der Aquakultur zum Färben des Fischfleisches von Forellen und Lachsen eingesetzt wurde. Dieses Carotinoid hat zahlreiche weitere Einsatzgebiete, so wird es unter anderem als Radikalfänger, Hormonvorläufer, Wachtumsförderer, Photoprotektor oder Immunstimulans eingesetzt. Daneben ist eine seiner wichtigsten Funktionen die als Antioxidans, denn es hat eine 10fach stärkere antioxidative Kapazität als andere Carotinoide, beispielsweise β-Carotin.
Aufgrund ihrer hohen Empfindlichkeit gegenüber Sauerstoff, Wärme und Licht können Carotinoide wie Astaxanthin bei der Lagerung leicht zerstört werden. Der Abbau kann auch eintreten, wenn das Carotinoid in einer Matrix aus anderen Stoffen wie z. B. Lipiden und Proteinen eingebettet vorliegt. Um den Abbau zu vermeiden ist der Zusatz und die Einarbeitung von Antioxidantien in die carotinoidhaltige Zubereitung erforderlich.

Bislang werden hierfür als Stabilisatoren synthetische Substanzen wie Ethoxyquin (1,2-Dihydro-6-ethoxy-2,2,4-trimethylchinolin) oder BHT (2,6-Di-t-butyl-4-methylphenol) eingesetzt. Auch Mischungen aus unterschiedlichen Aminen und Amiden wie in der Internationalen Anmeldung WO 0146355 offenbart oder Harnstoff beschrieben in der Internationalen Anmeldung WO 0001249 sind zum Einsatz für die Stabilisierung geeignet. Diese Stabilisatoren zeichnen sich jedoch vermehrt durch Nebenwirkungen und Auslösung allergischer Reaktionen aus, so dass ein Bedürfnis nach besser verträglichen Stabilisatoren mit gleicher Wirksamkeit besteht.
95 % des derzeit auf dem Markt eingesetzten Astaxanthins kommt aus synthetischer Herstellung. Da die Nachfrage nach natürlichen Produkten und deren Einsatz in Nahrungsmitteln, pharmazeutischen und kosmetischen Zubereitungen ständig wächst, wird in letzter Zeit vermehrt Astaxanthin aus aquatischem Urspung gewonnen, wobei die Microalge Haematococcus pluvialis die natürliche Quelle darstellt, die den höchsten Gehalt an Astaxanthin aufweist. Diese Microalge kann als trockene Biomasse eingesetzt werden. So wurden in der Internationalen Patentanmeldung **WO 99/13855** Formulierungen mit Extrakten von Haematococcus pluvialis zur Behandlung von rauher, trockener Haut offenbart.
Auch in Form der carotinoidhaltigen trockenen Biomasse unterliegt Astaxanthin der Zersetzung insbesondere bei erhöhter Temperaturbelastung, so dass die Lagerzeit trotz der Trocknung sehr begrenzt ist.

Die Aufgabe der vorliegenden Patentanmeldung hat daher darin bestanden, carotinoidhaltige Biomasse in einer physiologisch und toxikologisch gut verträglichen Form gegen Abbau des Carotinoids zu stabilisieren, um eine Lagerung bei Raumtemperatur oder erhöhter Temperatur zu ermöglichen.

### Beschreibung der Erfindung

Gegenstand der Erfindung ist die Verwendung von Tocopherolgemischen zur Stabilisierung carotinoidhaltiger Biomasse und Biomassezubereitungen, insbesondere zur Stabilisierung astaxanthinhaltiger Biomasse.

Überraschender Weise wurde festgestellt, dass natürliche Tocopherolgemische auch in trockenen Systemen zur Stabilisierung von carotinoidhaltiger Biomasse und biosynthetisch mit der Grünalge Haematococcus pluvialis hergestelltem Astaxanthin und Astaxanthinestem geeignet sind. Die Einarbeitung der Tocopherolgemische ermöglicht es die Lagerzeit fester carotinoidhaltiger Biomassen und Biomassezubereitungen auch bei Raumtemperatur und erhöhten Temperaturen erheblich zu verlängern.
Durch die schonende Einarbeitung der Antioxidantien in die in Wasser suspendierte Algenbiomasse in einem Kombinationsprozess mit dem Zellaufschluss wird ein Produkt gewonnen, das vollständig frei von synthetischen Zusatzstoffen und wesentlich besser lagerfähig ist als unstabilisierte Trockenbiomasse. Zur Verwendung in Futtermitteln, Kosmetika und pharmazeutischen Zubereitungen steht damit ein sehr gut bioverfügbares Produkt frei von synthetischen Stabilisatoren zur Verfügung. Tocopherolgemische zeichnen sich durch eine sehr gute Verträglichkeit aus.
Unter Tocopherolen werden in 2-Stellung mit 4,8,12-Trimethyltridecyl-Resten substituierte Chroman-6-ole (3,4-Dihydro-2-*H*-1benzopyran-6-ole) verstanden, die der Formel **(I)** folgen, in der R², R³ und R⁴ unabhängig voneinander für Wasserstoff oder eine Methylgruppe stehen. Tocopherole werden auch als Biochinone bezeichnet. Typische Beispiele sind die Plastichinone, Tocopherolchinone, Ubichinone, Bovichinone, K-Vitamine und Menachinone (z.B. 2-Methyl-1,4-naphthochinone). Vorzugsweise werden die Chinone aus der Vitamin-E-Reihe, d.h. α-, β-, γ-, δ- und ε-Tocopherol eingesetzt, wobei letzteres noch über die ursprüngliche ungesättigte Prenylseitenkette verfügt.

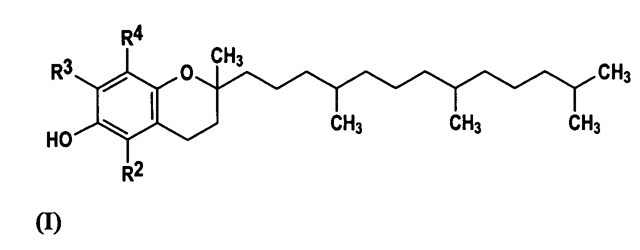

Die besonders bevorzugte Einsatzform der Tocopherolgemische enthält α-, und β-, und γ-und δ- Tocopherol gegebenenfalls in Kombination mit Emulgatoren.
Untersuchungen mit unterschiedlichen Tocopherolen haben gezeigt, dass die natürlichen Mischung umfassend 5 bis 20 Gew. % bevorzugt 12 bis 17 Gew.% α-Tocopherol, 0,01 bis 2 Gew. %, bevorzugt 0,1 bis 0,5 Gew. % β-Tocopherol, 30 bis 80 Gew. %, bevorzugt 50 bis 70 Gew. % γ-Tocopherol und 10 bis 40 Gew. %, bevorzugt 20 bis 30 Gew. % δ-Tocopherol (erhältlich unter dem Handelsnamen Covi-ox® , Cognis Deutschland GmbH & Co. KG, Düsseldorf) die beste stabilisierende Wirksamkeit aufweist.

Die carotinoidhaltige Biomasse wird vorzugsweise aus Algen gewonnen, wobei Haematococcus pluvialis bevorzugt als Hauptquelle für die Herstellung aus aquatischem Ursprung dient, da sie einen hohen Gehalt an Astaxanthin aufweist.
Carotinoide wie Astaxanthin werden in der aufgeschlossenen Algenbiomasse als Matrixsubstanz durch den Zusatz der Tocopherolgemische gegen oxidativen Abbau stabilisiert. Zum Einsatz kommen 0,1 bis 10 Gew. % der Tocopherolgemische, bevorzugt 0,2 bis 5 Gew. % besonders bevorzugt 0,3 bis 2 Gew. % bezogen auf das Gewicht der Biotrockenmasse.
Neben den in den Algen natürlich vorkommenden oberflächenaktiven Substanzen können dem System zur Verbesserung der Wirksamkeit noch zusätzliche Emulgatoren zugesetzt werden.
Die Einarbeitung erfolgt in die wässrige Biomassesuspension in einem Kombinationsverfahren parallel zum Zellaufschluss oder in einer zweiten Stufe unmittelbar nach dem Aufschluss. Sofern vor der Trocknung eine mechanische Vorentwässerung der Biomassesuspension erfolgt, ist darauf zu achten, dass kein Stabilisator mit dem Wasser abgetrennt wird.

### Beispiel

Zum Nachweis der stabilisierenden Wirkung wurden Haematococcus pluvialis Biomasse mit einem Astaxanthingehalt von 4,5 Gew. % bezogen auf das Gewicht der Trockenbiomasse und die beiden Stabilisatoren Controx® KS (Cognis Deutschland GmbH & Co. KG, Düsseldorf) und Controx® VP (Cognis Deutschland GmbH & Co. KG, Düsseldorf) verwendet. Controx® KS enthält 80 Gew. % gemischte Tocopherole und 20 Gew. % Citronensäuremono- und -diglyceride, Controx® VP enthält 25 Gew. % gemischte Tocopherole, 10% Citronensäuremono- und -diglyceride, 25 Gew. % Ascorbylpalmitat und 40 Gew. % Lecitin (Angaben in Massenprozent).
Bezogen auf die Trockensubstanz sind die Proben mit 10 Gew. % von einem der beiden Misch-Tocopherol-Zubereitungen, bzw. als Referenz ohne Stabilisator, in wässriger Suspension intensiv dispergiert und anschließend gefriergetrocknet worden.
Die trockenen Proben sind in nicht gasdicht verschlossenen Gläsern bei einer Temperatur von -20, 20 und 40°C über 38 Tage inkubiert worden um den Lagerprozess zu simulieren.
Die Bestimmung der Astaxanthingehalte über Lösemittelextraktion und Hochleistungs-Flüssigkeitschromatographie führt zu dem in der u.a. Tabelle 1 wiedergegebenen Ergebnissen.
Es ist hieraus ersichtlich, dass die Lagerung in gefrorenem Zustand auch ohne Stabilisator möglich ist, das aber bei Raum- und erhöhter Temperatur das Astaxanthin in den unstabilisierten Proben innerhalb der Lagerzeit vollständig abgebaut wird. Während die Stabilisatoren bei Raumtemperatur eine vergleichbare Wirksamkeit zeigen ist das Produkt mit dem höheren Tocopherolgehalt bei erhöhter Temperatur klar überlegen.

**Tabelle 1:**

| **Astaxanthingehalt unterschiedlich stabilisierter Biomasse nach 38 Tagen Lagerung** | | |
|---|---|---|
| **Temperatur** | **Zusatz** | **Astaxanthingehalt** |
| [°C] | | [Gew. %] |
| -20 | ohne | 4,5 |
| -20 | Controx® KS | 4,4 |
| -20 | Controx® VP | 4,5 |
| 20 | ohne | 0,0 |
| 20 | Controx® KS | 3,5 |
| 20 | Controx® VP | 3,4 |
| 40 | ohne | 0,0 |
| 40 | Controx® KS | 2,3 |
| 40 | Controx® VP | 1,7 |

## Patentansprüche

1. Verwendung von Tocopherolgemischen zur Stabilisierung carotinoidhaltiger Biomasse und Biomassezubereitungen.

2. Verwendung von Tocopherolgemischen zur Stabilisierung astaxanthinhaltiger Biomasse und Biomassezubereitungen.

3. Verwendung gemäß Anspruch 1 und/oder 2, **dadurch gekennzeichnet, dass** die Tocopherolgemische α-, und β-, und γ- und δ- Tocopherol enthalten.

4. Verwendung gemäß den Ansprüchen 1 bis 3, **dadurch gekennzeichnet, dass** man ein Tocopherolgemisch in einer Menge von 0,1 bis 10 Gew. % bezogen auf das Gewicht der Biotrockenmasse einsetzt.

5. Verfahren zur Stabilisierung carotinoidhaltiger Biomassen und Biomassezubereitungen, bei dem man ein Tocopherolgemisch enthaltend α-, und β-, und γ- und δ- Tocopherol in einer Menge von 0,1 bis 10 Gew. % bezogen auf das Gewicht der Biotrockenmasse zusetzt..

6. Carotinoidhaltige Biomasse enthaltend 0,1 bis 10 Gew. % - bezogen auf das Gewicht der Biotrockenmasse - eines Tocopherolgemisches.

7. Carotinoidhaltige Biomasse umfassend 0,1 bis 10 Gew. % - bezogen auf das Gewicht der Biotrockenmasse - eines α-, und β-, und γ- und δ- Tocopherol enthaltenden Tocopherolgemisches.

8. Astaxanthinhaltige Biomasse enthaltend 0,1 bis 10 Gew. % - bezogen auf das Gewicht der Biotrockenmasse - eines Tocopherolgemisches.

9. Biomasse gemäß den Ansprüchen 6 bis 8, **dadurch gekennzeichnet, dass** sie aus Haematococcus pluvialis gewonnen wurde.
